Europäisches Patentamt

(19) European Patent Office

Office européen des brevets

(11) EP 0 921 450 B1

## (12) FASCICULE DE BREVET EUROPEEN

(45) Date de publication et mention
de la délivrance du brevet:
**30.05.2001 Bulletin 2001/22**

(51) Int Cl.[7]: **G03H 1/08**

(21) Numéro de dépôt: **97402798.9**

(22) Date de dépôt: **20.11.1997**

(54) **Procédé et dispositif de synthèse d'hologrammes**

Verfahren und Vorrichtung zur Synthese von Hologrammen

Method and device for the synthesis of holograms

(84) Etats contractants désignés:
**AT BE CH DE DK ES FI FR GB GR IE IT LI LU MC NL PT SE**

(43) Date de publication de la demande:
**09.06.1999 Bulletin 1999/23**

(73) Titulaire: **EUROPEAN COMMUNITY**
**2920 Luxembourg (LU)**

(72) Inventeurs:
• **Grossetie, Jean-Claude**
**21027 Ispra (Varese) (IT)**
• **Noirard, Pierre**
**67640 Lipsheim (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
• **MICHELIN S ET AL: "Fourier-transform computer-generated hologram: a variation on the off-axis principle" PRACTICAL HOLOGRAPHY VIII, SAN JOSE, CA, USA, 7-9 FEB. 1994, vol. 2176, ISSN 0277-786X, PROCEEDINGS OF THE SPIE - THE INTERNATIONAL SOCIETY FOR OPTICAL ENGINEERING, 1994, USA, pages 249-254, XP002061907**
• **LESEBERG D: "COMPUTER-GENERATED THREE-DIMENSIONAL IMAGE HOLOGRAMS" APPLIED OPTICS, vol. 31, no. 2, 10 janvier 1992, pages 223-229, XP000246871**

EP 0 921 450 B1

## Description

La présente invention concerne de manière générale la synthèse d'hologrammes, et plus particulièrement la synthèse numérique d'hologrammes à partir d'images bidimensionnelles stockées dans une mémoire.

La synthèse numérique d'hologrammes à partir d'images bidimensionnelles est utilisée par exemple dans les procédés de restitution d'images en trois dimensions. Des hologrammes sont calculés respectivement pour des images numériques bidimensionnelles représentatives d'un objet tridimensionnel suivant des points de vue différents. Ces hologrammes sont alors combinés de manière à produire un hologramme de l'objet, qui lorsqu'il est reproduit physiquement par un modulateur spatial de lumière éclairé par une onde cohérente, permet de restituer une image en trois dimensions de l'objet.

D'autres applications existent pour la synthèse numérique d'hologrammes, notamment dans les domaines des télécommunications, des radars, des rayons X et des sonars.

Des techniques de synthèse numérique d'hologrammes sont connues. Par exemple, l'article de S. Michelin et al., intitulé « Fourier- transform computer generated hologram : a variation on the off-axis principle » publié dans SPIE conferences 1994, Practical Holography VIII, pages 249-254, décrit un procédé pour simuler la production d'un hologramme analogique. Ce procédé consiste à appliquer une transformation de Fourier à une image bidimensionnelle, à additionner un champ complexe représentant une onde optique de référence à la transformée de Fourier ainsi obtenue, puis à extraire l'information d'amplitude contenue dans la somme du champ complexe et de la transformée de Fourier. L'application de la transformation de Fourier à l'image bidimensionnelle permet de simuler numériquement la production d'une image dite « diffractée » qui résulte de la diffraction d'une onde optique fictive par l'image bidimensionnelle. Un suréchantillonnage de l'image bidimensionnelle est par ailleurs effectué avant l'application de la transformation de Fourier à cette image. Toutefois, l'image bidimensionnelle suréchantillonnée ainsi obtenue est décrite par une distribution réelle d'intensités qui n'est pas toujours bien adaptée au calcul d'une transformation complexe, telle que la transformation de Fourier.

La présente invention vise à fournir un procédé de synthèse d'hologrammes plus efficace que ceux de la technique antérieure.

A cette fin, un procédé pour produire un hologramme à partir d'une image bidimensionnelle définie par une fonction réelle, est caractérisé en ce qu'il comprend les étapes suivantes :

transformer l'image bidimensionnelle définie par ladite fonction réelle en une image bidimensionnelle complexe définie par une fonction complexe, suréchantillonner l'image complexe, simuler la production d'une image diffractée résultant de la diffraction d'une onde optique par l'image complexe suréchantillonnée, et additionner un champ complexe représentatif d'une onde optique de référence à l'image diffractée résultante afin de produire ledit hologramme.

Le procédé peut en outre comprendre l'étape de coder des valeurs prises par l'amplitude de la somme dudit champ complexe et de l'image diffractée résultante, de façon que l'hologramme puisse être par exemple reproduit par un écran à cristaux liquides ou transmis sur une ligne de transmission.

Par fonction réelle ou complexe, on entend ici une fonction à deux variables prenant des valeurs réelles ou complexes respectivement. La fonction réelle est typiquement une distribution d'intensités, alors que la fonction complexe est une distribution de nombres complexes définis chacun par une amplitude et une phase réelles.

L'étape de transformer l'image bidimensionnelle en une image complexe permet de déterminer, à partir de l'image bidimensionnelle initiale, une image qui est décrite par des nombres complexes qui représentent au mieux le champ optique réel et facilitent les calculs mis en oeuvre dans l'étape de simuler.

L'étape de suréchantillonner permet d'augmenter le nombre de pixels de l'hologramme, puisque les calculs mis en oeuvre au cours des étapes suivantes sont effectués sur un plus grand nombre de points d'image. Cette étape peut consister à insérer l'image complexe dans une image plus grande dans laquelle l'intensité des pixels extérieurs à l'image complexe initiale est choisie égale à 0. Dans ce cas, le fait de mettre en oeuvre l'étape de suréchantillonner l'image complexe après les étapes de transformer l'image bidimensionnelle en une image complexe évite de devoir calculer la fonction complexe pour les points de l'image suréchantillonnée extérieurs à l'image complexe initiale.

Typiquement, l'étape de transformer comprend les étapes suivantes :

déterminer des valeurs d'amplitude dépendant chacune de la racine carrée d'une valeur correspondante prise par ladite fonction réelle, et associer une phase à chacune desdites valeurs d'amplitude de sorte qu'une valeur d'amplitude et une valeur de phase soient définies pour chaque point de l'image complexe.

Le fait d'associer une phase à chaque valeur d'amplitude permet d'éviter que l'hologramme résultant présente des pics d'amplitude trop élevés en moyennant les valeurs d'amplitude de cet hologramme.

L'étape de simuler peut comprendre le calcul de l'une des transformations complexes suivantes :

transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant de la composition d'au moins deux des transformations précitées.

Avantageusement, l'étape de simuler consiste à calculer un produit de convolution, associé à l'image complexe suréchantillonnée, de deux composantes, en appliquant la transformation inverse de ladite transformation complexe au produit des transformations complexes respectives desdites deux composantes.

Jusqu'à présent, l'homme du métier considérait que pour calculer un tel produit de convolution, la transformation de Fourier était la meilleure transformation possible, puisque cette transformation est largement utilisée en optique. Il a toutefois été trouvé expérimentalement par les présents inventeurs que l'utilisation, parmi les transformations complexes mentionnées ci-dessus, de l'une des transformations autres que la transformation de Fourier permet de produire un hologramme résultant pour l'image bidimensionnelle de bien meilleure qualité, c'est-à-dire un hologramme qui, lorsqu'il est reproduit physiquement et éclairé par une source cohérente, permet de restituer une image associée à l'image bidimensionnelle plus fine que celles généralement produites par les systèmes de la technique antérieure.

Selon un autre aspect de l'invention, un procédé pour produire un hologramme à partir d'une image bidimensionnelle définie par une fonction réelle, est caractérisé en ce qu'il comprend les étapes suivantes :

suréchantillonner l'image bidimensionnelle,
transformer l'image bidimensionnelle suréchantillonnée en une image bidimensionnelle complexe définie par une fonction complexe,
simuler la production d'une image diffractée résultant de la diffraction d'une onde optique par l'image complexe suréchantillonnée, et
additionner un champ complexe représentatif d'une onde optique de référence à l'image diffractée résultante afin de produire ledit hologramme.

Egalement, l'invention concerne un dispositif pour produire un hologramme à partir d'une image bidimensionnelle définie par une fonction réelle, qui est caractérisé en ce qu'il comprend :

un moyen de transformation pour transformer l'image bidimensionnelle définie par ladite fonction réelle en une image bidimensionnelle complexe définie par une fonction complexe,
un moyen pour suréchantillonner l'image complexe,
un moyen de simulation pour simuler la production d'une image diffractée résultant de la diffraction d'une onde optique par l'image complexe suréchantillonnée, et
un moyen pour additionner un champ complexe représentatif d'une onde optique de référence à l'image diffractée résultante afin de produire ledit hologramme.

Le dispositif peut en outre comprendre un moyen pour coder des valeurs prises par l'amplitude de la somme dudit champ complexe et de l'image diffractée.

Le moyen de transformation peut comprendre un moyen pour déterminer des valeurs d'amplitude dépendant chacune de la racine carrée d'une valeur correspondante prise par la fonction réelle, et un moyen pour associer une phase à chacune des valeurs d'amplitude de sorte qu'une valeur d'amplitude et une valeur de phase soient définies pour chaque point de l'image complexe.

Le moyen de simulation peut comprendre un moyen pour calculer l'une des transformations complexes suivantes : transformation de Fourier, transformation de Walsh, transformation de Hankel, transformation de polynômes orthogonaux, transformation de Hadamar, transformation de Karhunen-Loeve, transformation d'ondelettes discrètes en mutirésolution, transformation d'ondelettes adaptatives, et transformation résultant de la composition d'au moins deux des transformations précitées.

Avantageusement, le moyen de simulation comprend un moyen pour calculer un produit de convolution, associé à l'image complexe suréchantillonnée, de deux composantes en appliquant la transformation inverse de ladite transformation complexe au produit des transformations complexes respectives desdites deux composantes.

Selon un autre aspect de l'invention, un dispositif pour produire un hologramme à partir d'une image bidimensionnelle définie par une fonction réelle, est caractérisé en ce qu'il comprend :

un moyen pour suréchantillonner l'image bidimensionnelle,
un moyen pour transformer l'image bidimensionnelle suréchantillonnée en une image bidimensionnelle complexe définie par une fonction complexe,
un moyen de simulation pour simuler la production d'une image diffractée résultant de la diffraction d'une onde optique par l'image complexe suréchantillonnée, et
un moyen pour additionner un champ complexe représentatif d'une onde optique de référence à l'image diffractée résultante afin de produire ledit hologramme.

D'autres avantages de la présente invention apparaîtront à la lecture de la description détaillée suivante en référence aux dessins annexés dans lesquels :

- la figure 1 est un organigramme d'un algorithme conforme à l'invention ;
- la figure 2 est un schéma-bloc d'un ordinateur mettant en oeuvre l'algorithme de la figure 1 ;
- la figure 3 illustre la production d'un hologramme à partir d'une image bidimensionnelle ;
- la figure 4 illustre le suréchantillonnage d'une image bidimensionnelle, tel qu'il est mis en oeuvre par l'algorithme de la figure 1 ; et
- la figure 5 est un schéma montrant des plans géométriques utilisés dans l'algorithme de la figure 1.

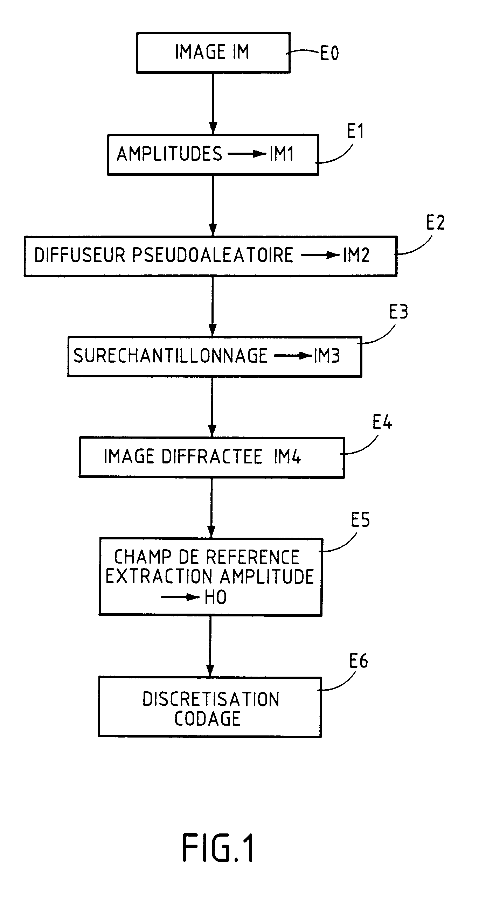

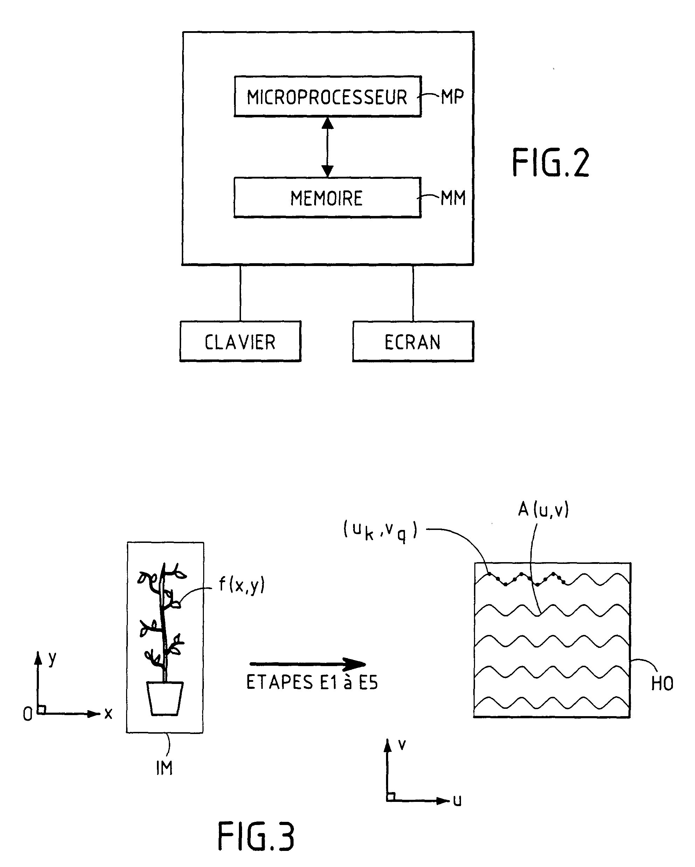

La figure 1 montre un algorithme de synthèse d'hologrammes conforme à la présente invention, qui est mis en oeuvre par un microprocesseur MP associé à une mémoire MM illustrés à la figure 2.

A une étape préliminaire E0, une image bidimensionnelle numérique IM, montrée schématiquement à la figure 3, est mémorisée dans la mémoire MM associée au microprocesseur MP. L'image bidimensionnelle IM est typiquement décrite par une fonction réelle à deux variables, et plus particulièrement par une distribution d'intensités f(x,y), où (x,y) représentent des coordonnées dans un repère bidimensionnel (O,x,y) associé à l'image IM.

A une étape E1, l'image bidimensionnelle IM est transformée en une image bidimensionnelle transformée IM1 qui est décrite par une distribution d'amplitudes, en calculant pour chaque point de l'image IM une valeur proportionnelle à la racine carrée de la valeur d'intensité correspondante.

A une étape suivante E2, un diffuseur dit « pseudoaléatoire » est généré numériquement. Ce diffuseur consiste en une « image » ayant le même nombre de pixels que l'image bidimensionnelle IM, et dont chaque pixel a une valeur d'intensité égale à 1 et une phase aléatoire. Chaque phase du diffuseur est alors associée à un pixel correspondant de l'image bidimensionnelle transformée IM1, pour transformer l'image IM1 en une image dite « complexe » IM2 dans laquelle un nombre complexe défini par une valeur d'amplitude et une valeur de phase est déterminé pour chaque pixel. Le diffuseur pseudoaléatoire permet d'éviter que l'hologramme résultant HO, montré schématiquement à la figure 3, associé à l'image IM, présente de trop grandes disparités de niveaux d'amplitude en moyennant les valeurs d'amplitude de cet hologramme.

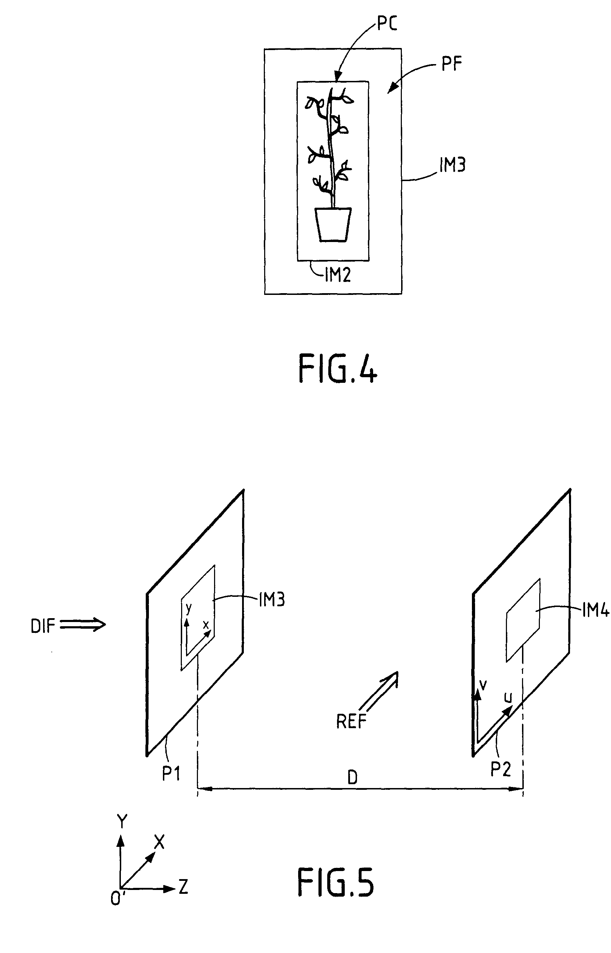

A une étape E3, l'image complexe IM2 obtenue à l'étape E2 est suréchantillonnée, c'est-à-dire cette image est incluse dans une image plus grande, comme montré à la figure 4. Une image suréchantillonnée IM3 est ainsi formée, constituée dans une partie centrale PC par l'image complexe IM2 et dans une partie périphérique complémentaire PF de pixels dont l'amplitude est choisie arbitrairement, par exemple égale à 0. Ce suréchantillonnage de l'image complexe IM2 permet d'augmenter le nombre de pixels de l'hologramme résultant HO et donc d'obtenir une meilleure résolution pour ce dernier.

A une étape E4, on simule numériquement la production d'une image diffractée IM4 résultant de la diffraction d'une onde optique cohérente fictive DIF par l'image complexe suréchantillonnée IM3. A cet effet, des premier et second plans géométriques parallèles et disjoints P1 et P2 sont définis dans un repère tridimensionnel (O', X, Y, Z), comme montré sur la figure 5. Le premier plan P1 inclut l'image complexe suréchantillonnée IM3, tandis que le second plan P2 constitue le plan de calcul de l'hologramme HO. La simulation de la production de l'image diffractée IM4 peut être réalisée de manière connue en appliquant une transformation de Fourier à l'image IM3. Dans le procédé selon l'invention, l'image diffractée IM4 est de préférence déterminée autrement, en calculant, dans le plan P2, un produit de convolution associé à l'image complexe suréchantillonnée IM3. Ce produit de convolution est conforme à la théorie de la diffraction scalaire. A titre d'exemple, selon une formulation de la diffraction scalaire de type Rayleigh-Sommerfeld, les deux composantes du produit de convolution peuvent correspondre respectivement à un champ complexe représentatif de l'image complexe suréchantillonnée IM3 et à un champ complexe représentatif d'une onde optique sphérique de même longueur d'onde que l'onde optique DIF. D'autres types de produits de convolution pour le calcul d'une image diffractée sont toutefois connus de l'homme du métier. Le produit de convolution calculé à l'étape E4 utilise comme paramètres notamment la distance D séparant les plans géométriques P1 et P2 et la longueur d'onde de l'onde optique cohérente DIF.

Le calcul du produit de convolution est réalisé, selon l'invention, en appliquant une transformation complexe, dite également transformation rapide complexe, aux deux composantes du produit de convolution, en calculant le produit des transformées rapides complexes résultantes, puis en appliquant la transformation rapide complexe inverse de ladite transformation rapide complexe au produit précité des transformées rapides complexes.

De manière plus explicite, si CONV désigne le produit de convolution, C1 et C2 les deux composantes de celui-ci, et T la transformation rapide complexe, alors le produit de convolution s'écrit :

$$CONV = C1 \otimes C2 = T^{-1}T(C1 \otimes C2)$$

$$CONV = T^{-1}(T(C1)T(C2)).$$

Par transformation rapide complexe, on entend ici une transformation mathématique compatible avec la théorie de la diffraction optique scalaire, c'est-à-dire dont les fonctions transformées résultantes satisfont aux équations conventionnelles de la diffraction scalaire. La transformation rapide complexe doit en outre satisfaire la propriété selon laquelle la transformée rapide complexe d'un produit de convolution de deux composantes est égal au produit des transformées rapides complexes respectives desdites deux composantes. Des transformations rapides complexes qui remplissent les conditions ci-dessus sont la transformation de Fourier, la transformation de polynômes orthogonaux, la transformation de Paley, la transformation de Hadamar, la transformation de Walsh, la transformation de Hankel, la transformation de Karhunen-Loeve, la transformation d'ondelettes discrètes en multirésolution, et la transformation d'ondelettes adaptatives. D'autres transformations rapides complexes appropriées sont celles résultant d'une composition entre au moins deux des transformations précitées, telles qu'une composition entre la transformation de Walsh et la transformation d'Hadamar. L'application d'une composition de deux transformations données T1 et T2 à une image quelconque I est définie, de façon mathématiquement classique, par $(T1 \circ T2)(I) = T1(T2(I))$.

Chacune des transformations rapides complexes précitées peut être utilisée dans un cas spécifique. En particulier, le choix de la transformation rapide complexe peut être effectué en fonction de la distance D séparant les plans P1 et P2. Pour une grande distance D, une transformation de Fourier est appropriée. Pour une distance D plus faible, une transformation de Walsh convient mieux. Egalement, il a été trouvé que l'utilisation parmi les transformations rapides complexes susmentionnées d'une transformation autre que la transformation de Fourier donne de meilleurs résultats en termes de qualité de l'hologramme HO que ceux obtenus par la transformation de Fourier.

Il est par ailleurs à noter que grâce à la transformation de l'image bidimensionnelle initiale IM en une image complexe IM2, le calcul, à l'étape E4, du produit de convolution associé à l'image IM est effectué de manière plus pratique que dans la technique antérieure, puisque la transformation rapide complexe est appliquée directement sur une image IM3 décrite par une fonction complexe et non pas sur une image décrite par une fonction réelle.

A l'issue de l'étape E4, l'image diffractée IM4 est décrite par un champ complexe constitué par un ensemble de nombres complexes dont chacun est associé à un point de l'image IM4. Chacun de ces nombres complexes dépend par ailleurs de l'image IM3 prise dans son ensemble.

A une étape suivante E5, un champ complexe simulant une onde optique de référence REF de même longueur d'onde que l'onde optique DIF, dirigée vers le plan de calcul d'hologramme P2, est additionné, dans le plan P2, au champ complexe représentatif de l'image diffractée IM4, puis l'information d'amplitude contenue dans le champ complexe résultant est extraite afin de produire un champ d'interférences. L'addition des deux champs complexes précités est effectuée en additionnant, en chaque point de l'image diffractée IM4, le nombre complexe associé à ce point et la valeur, en ce même point, du champ complexe représentatif de l'onde de référence REF. Ledit champ d'interférences constitue l'hologramme HO de l'image bidimensionnelle IM.

Selon une variante de l'algorithme de la figure 1, les étapes E1 et E2 de production de l'image complexe IM2, et/ou l'étape E3 de suréchantillonnage sont supprimées. Selon une autre variante, l'étape de suréchantillonnage E3 est mise en oeuvre avant l'étape E1.

L'hologramme HO de l'image bidimensionnelle IM obtenu à l'étape E5 est un champ, ou réseau, diffractif, qui est calculé pour une longueur d'onde particulière, à savoir la longueur d'onde des ondes optiques DIF et REF. Cet hologramme, qui se présente à l'étape E5 sous forme virtuelle, c'est-à-dire est représenté par des données numériques, est tel que, s'il est reproduit physiquement par un écran holographique, un éclairage dudit écran holographique par une source laser émettant à la longueur d'onde précitée permet de restituer, dans un ordre de diffraction donné, l'image bidimensionnelle initiale IM.

L'hologramme HO obtenu à l'étape E5 est décrit numériquement par une fonction bidimensionnelle d'amplitudes $A(u,v)$, où $(u,v)$ désignent des coordonnées dans le plan de calcul d'hologramme P2 qui correspondent par exemple à des fréquences spatiales d'image dans le cas où la transformation rapide complexe choisie à l'étape E4 est une transformation de Fourier. La fonction bidimensionnelle d'amplitudes $A(u,v)$ est déduite, comme expliqué ci-dessus, de la fonction bidimensionnelle d'intensités $f(x,y)$ décrivant l'image bidimensionnelle IM. En pratique, la fonction $A(u,v)$ est calculée seulement pour une suite de points discrets $(u,v) = (u_k, v_q)$, où k et q sont des entiers. Toutefois, les valeurs que prend la fonction $A(u,v)$ peuvent s'étaler continûment entre une valeur d'amplitude minimale et une valeur d'amplitude maximale.

A une étape E6 de l'algorithme de la figure 1, les valeurs prises par la fonction $A(u,v)$ sont discrétisées et codées, c'est-à-dire à chaque valeur de cette fonction est associée une valeur discrète qui est codée numériquement par exemple sur 8 bits. A chaque couple de points discrets $(u_k, v_q)$ correspond alors une valeur d'amplitude discrète, représentative d'un niveau de gris, parmi 256 valeurs. Les amplitudes $A(u,v)$ peuvent également être discrétisées plus simplement en associant, pour chaque valeur d'amplitude de $A(u,v)$, la valeur discrète « 0 » si ladite valeur d'amplitude est inférieure à un seuil prédéterminé, ou la valeur discrète « 1 » si ladite valeur d'amplitude est supérieure au seuil prédéterminé.

L'étape de codage E6 permet notamment d'adapter l'hologramme HO à des dispositifs d'affichage numériques, tels qu'un écran à cristaux liquides commandé numériquement, ou de faciliter la transmission de l'hologramme au moyen de systèmes de télécommunication.

## Revendications

1. Procédé pour produire un hologramme (HO) à partir d'une image bidimensionnelle (IM ; IM3) se présentant sous forme de données numériques, comprenant les étapes suivantes :

   simuler (E4) la production d'une image diffractée (IM4) résultant de la diffraction d'une onde optique (DIF) par l'image bidimensionnelle (IM ; IM3), et
   additionner (E5) un champ complexe représentatif d'une onde optique de référence (REF) à l'image diffractée résultante (IM4) afin de produire ledit hologramme (HO),

   caractérisé en ce que l'étape de simulation (E4) consiste à calculer un produit de convolution, associé à l'image bidimensionnelle, de deux composantes, en appliquant une transformation complexe aux deux composantes de manière à obtenir deux transformées respectives, et en appliquant en outre la transformation inverse de ladite transformation complexe au produit desdites transformées.

2. Procédé selon la revendication 1, caractérisé en ce que ladite transformation complexe est l'une des transformations complexes suivantes : transformation de Walsh, transformation de Hankel, transformation de Paley, transformation de polynômes orthogonaux, transformation de Hadamar, transformation de Karhunen-Loeve, transformation d'ondelettes discrètes en mutirésolution, transformation d'ondelettes adaptatives, transformation résultant d'une composition d'au moins deux des transformations ci-dessus, et transformation résultant d'une composition d'au moins l'une des transformations ci-dessus et d'une transformation de Fourier.

3. Procédé selon la revendication 1, caractérisé en ce que ladite transformation complexe est la transformation de Fourier.

4. Procédé selon l'une quelconque des revendications 1 à 3, caractérisé en ce que l'image bidimensionnelle (IM) est définie par une fonction réelle (f(x,y)), et en ce qu'il comprend, préalablement à l'étape de simulation (E4), une étape de transformation (E1, E2) de l'image bidimensionnelle définie par ladite fonction réelle en une image bidimensionnelle complexe (IM2) définie par une fonction complexe.

5. Procédé selon la revendication 4, caractérisé en ce que ladite étape de transformation (E1, E2) de l'image bidimensionnelle en une image bidimensionnelle complexe (IM2) comprend les étapes suivantes :

   déterminer (E1) des valeurs d'amplitude dépendant chacune de la racine carrée d'une valeur correspondante prise par ladite fonction réelle, et
associer (E2) une phase à chacune desdites valeurs d'amplitude de sorte qu'une valeur d'amplitude et une valeur de phase soient définies pour chaque point de l'image complexe.

6. Procédé selon l'une quelconque des revendications 1 à 5, caractérisé en ce qu'il comprend, préalablement à l'étape de simulation (E4), une étape de suréchantillonnage (E3) de l'image bidimensionnelle (IM ; IM2).

7. Procédé selon les revendications 4 et 6, ou selon les revendications 5 et 6, caractérisé en ce que l'étape de suréchantillonnage est mise en oeuvre après l'étape de transformation de l'image bidimensionnelle en une image bidimensionnelle complexe.

8. Procédé selon l'une quelconque des revendications 1 à 7, comprenant en outre une étape de codage (E6) des valeurs prises par l'amplitude de la somme dudit champ complexe et de l'image diffractée résultante (IM4).

9. Procédé selon l'une quelconque des revendications 1 à 8, caractérisé en ce que les deux composantes du produit de convolution correspondent respectivement à un champ complexe représentatif de l'image bidimensionnelle (IM ; IM3) et à un champ complexe représentatif d'une onde optique sphérique (DIF).

10. Dispositif pour produire un hologramme (HO) à partir d'une image bidimensionnelle (IM ; IM3), comprenant :

   un moyen (MP) pour simuler (E4) la production d'une image diffractée (IM4) résultant de la diffraction d'une onde optique (DIF) par l'image bidimensionnelle (IM ; IM3), et
   un moyen (MP) pour additionner (E5) un champ complexe représentatif d'une onde optique de référence (REF) à l'image diffractée résultante (IM4) afin de produire ledit hologramme (HO),

   caractérisé en ce que le moyen de simulation comprend un moyen (MP) pour calculer un produit de convolution, associé à l'image bidimensionnelle, de deux composantes, en appliquant une transformation complexe aux deux composantes de manière à obtenir deux transformées respectives, et en appliquant en outre la transformation inverse de ladite transformation complexe au produit desdites transformées.

**11.** Dispositif selon la revendication 10, caractérisé en ce que ladite transformation complexe est l'une des transformations complexes suivantes : transformation de Walsh, transformation de Hankel, transformation de Paley, transformation de polynômes orthogonaux, transformation de Hadamar, transformation de Karhunen-Loeve, transformation d'ondelettes discrètes en mutirésolution, transformation d'ondelettes adaptatives, transformation résultant d'une composition d'au moins deux des transformations ci-dessus, et transformation résultant d'une composition d'au moins l'une des transformations ci-dessus et d'une transformation de Fourier.

**12.** Dispositif selon la revendication 10, caractérisé en ce que ladite transformation complexe est la transformation de Fourier.

**13.** Dispositif selon l'une quelconque des revendications 10 à 12, caractérisé en ce qu'il comprend en outre un moyen (MP) pour transformer (E1, E2) l'image bidimensionnelle, définie par une fonction réelle (f(x,y)), en une image bidimensionnelle complexe (IM2) définie par une fonction complexe.

**14.** Dispositif selon la revendication 13, caractérisé en ce que ledit moyen pour transformer l'image bidimensionnelle en une image bidimensionnelle complexe (IM2) comprend :

un moyen (MP) pour déterminer (E1) des valeurs d'amplitude dépendant chacune de la racine carrée d'une valeur correspondante prise par ladite fonction réelle, et
un moyen (MP) pour associer (E2) une phase à chacune desdites valeurs d'amplitude de sorte qu'une valeur d'amplitude et une valeur de phase soient définies pour chaque point de l'image complexe.

**15.** Dispositif selon l'une quelconque des revendications 10 à 14, caractérisé en ce qu'il comprend en outre un moyen (MP) pour suréchantillonner l'image bidimensionnelle (IM ; IM2).

**16.** Dispositif selon l'une quelconque des revendications 10 à 15, caractérisé en ce qu'il comprend en outre un moyen (MP) pour coder (E6) des valeurs prises par l'amplitude de la somme dudit champ complexe et de l'image diffractée résultante (IM4).

**17.** Dispositif selon l'une quelconque des revendications 10 à 16, caractérisé en ce que les deux composantes du produit de convolution correspondent respectivement à un champ complexe représentatif de l'image bidimensionnelle (IM ; IM3) et à un champ complexe représentatif d'une onde optique sphérique (DIF).

**Patentansprüche**

**1.** Verfahren zum Erzeugen eines Hologramms (HO) aus einem zweidimensionalen Bild (IM; IM3) in Form numerischer Daten, umfassend folgende Schritte:

Simulieren (E4) der Erzeugung eines Beugungsbildes (IM4), welches sich aus der Beugung einer optischen Welle (DIF) durch das zweidimensionalte Bild (IM; IM3) ergibt, und Addieren (E5) eines komplexen Feldes, welches repräsentativ ist für eine optische Referenzwelle (REF), auf das resultierende Beugungsbild (IM), um das Hologramm (HO) zu erzeugen,

dadurch gekennzeichnet, daß der Simulationsschritt (E4) besteht aus: Berechnen eines zu dem zweidimensionalen Bild gehörigen Faltungsprodukts aus zwei Komponenten, indem eine komplexe Transformation auf die beiden Komponenten in der Weise angewendet wird, daß zwei entsprechende Transformierte erhalten werden, und außerdem Anwenden der zu der erwähnten komplexen Transformation inversen Transformation auf das Produkt der Transformierten.

**2.** Verfahren nach Anspruch 1, dadurch gekennzeichnet, daß die komplexe Transformation eine der folgenden komplexen Transformationen ist: Walsh-Transformation, Hankel-Transformation, Paley-Transformation, Transformation orthogonaler Polynome, Hadamar-Transformation, Karhunen-Loeve-Transformation, Transformation diskreter kleiner Wellen in Mehrfachauflösung, Transformation adaptiver kleiner Wellen, Transformation aus einer Zusammensetzung von mindestens zwei der oben angegebenen Transformationen, und Transformation aus einer Zusammensetzung mindestens einer der vorgenannten Transformationen und einer Fourier-Transformation.

**3.** Verfahren nach Anspruch 1, dadurch gekennzeichnet, daß die komplexe Transformation die Fourier-Transformation ist.

**4.** Verfahren nach einem der Ansprüche 1 bis 3, dadurch gekennzeichnet, daß das zweidimensionale Bild (IM) durch eine reelle Funktion (f(x,y)) definiert ist und daß es vor dem Simulationsschritt (E4) einen Schritt der Transformation (E1, E2) des durch die reelle Funktion definierten zweidimensionalen Bildes in ein durch eine komplexe Funktion definiertes komplexes zweidimensionales Bild umfaßt.

**5.** Verfahren nach Anspruch 4,

dadurch gekennzeichnet, daß der Schritt der Transformation (E1, E2) des zweidimensionalen Bildes in ein komplexes zweidimensionales Bild (IM) folgende Schritte beinhaltet:

Bestimmen (E1) von Amplitudenwerten, jeweils abhängig von der Quadratwurzel eines entsprechenden Wertes, der durch die erwähnte reelle Funktion erhalten wird, und

Zuordnen (E2) einer Phase zu jedem der Amplitudenwerte derart, daß ein Amplitudenwert und ein Phasenwert für jeden Punkt des komplexen Bildes definiert sind.

6. Verfahren nach einem der Ansprüche 1 bis 5, dadurch gekennzeichnet, daß es vor dem Simulationsschritt (E4) einen Schritt des Überabtastens (E3) des zweidimensionalen Bildes (IM; IM2) aufweist.

7. Verfahren nach Anspruch 4 in Verbindung mit Anspruch 6 oder nach Anspruch 5 in Verbindung mit Anspruch 6,
dadurch gekennzeichnet, daß der Schritt des Überabtastens ausgeführt wird nach dem Schritt der Transformation des zweidimensionalen Bildes in ein komplexes zweidimensionales Bild.

8. Verfahren nach einem der Ansprüche 1 bis 7, außerdem umfassend einen Schritt des Codierens (E6) von Werten, die durch die Amplitude der Summe des komplexen Feldes und des resultierenden Beugungsbildes (IM4) erhalten werden.

9. Verfahren nach einem der Ansprüche 1 bis 8, dadurch gekennzeichnet, daß die zwei Komponenten des Faltungsprodukts einem für das zweidimensionale Bild (IM; IM3) repräsentativen komplexen Feld bzw. einem für eine ungerichtete optische Welle (DIF) repräsentativen komplexen Feld entsprechen.

10. Vorrichtung zum Erzeugen eines Hologramms (HO) aus einem zweidimensionalen Bild (IM; IM3), umfassend:

eine Einrichtung (MP) zum Simulieren (E4) der Erzeugung eines Beugungsbildes (IM4), entstanden aus der Beugung einer optischen Welle (DIF) durch das zweidimensionale Bild (IM; IM3), und

eine Einrichtung (MP) zum Addieren (E5) eines für eine optische Referenzwelle (REF) repräsentativen komplexen Feldes auf das resultierende Beugungsbild (IM4), um das Hologramm (HO) zu erzeugen,

dadurch gekennzeichnet, daß die Simulationseinrichtung eine Einrichtung (MP) zum Berechnen eines zu dem zweidimensionalen Bild gehörigen Faltungsprodukts aus zwei Komponenten aufweist, indem eine komplexe Transformation auf die beiden Komponenten in der Weise angewendet wird, daß zwei Transformierte erhalten werden, und daß außerdem die zu der komplexen Transformation inverse Transformation auf das Produkt der Transformierten angewendet wird.

11. Vorrichtung nach Anspruch 10,
dadurch gekennzeichnet, daß die komplexe Transformation eine der folgenden komplexen Transformationen ist: Walsh-Transformation, Hankel-Transformation, Paley-Transformation, Transformation orthogonaler Polynome, Hadamar-Transformation, Karhunen-Loeve-Transformation, Transformation diskreter kleiner Wellen in Mehrfachauflösung, Transformation adaptiver kleiner Wellen, Transformation aus einer Zusammensetzung von mindestens zwei der oben angegebenen Transformationen, und Transformation aus einer Zusammensetzung mindestens einer der vorgenannten Transformationen und einer Fourier-Transformation.

12. Vorrichtung nach Anspruch 10,
dadurch gekennzeichnet, daß die komplexe Trnasformation die Fourier-Transformation ist.

13. Vorrichtung nach einem der ansprüche 10 bis 12, dadurch gekennzeichnet, daß sie außerdem eine Einrichtung (MP) zum Transformieren (E1, E2) des durch eine reelle Funktion (f(x,y)) definierten zweidimensionalen Bildes in ein durch eine komplexe Funktion definiertes komplexes zweidimensionales Bild (IM2) enthält.

14. Vorrichtung nach Anspruch 13,
dadurch gekennzeichnet, daß die Einrichtung zum Transformieren des zweidimensionalen Bildes in ein komplexes zweidimensionales Bild (IM2) aufweist:

eine Einrichtung (MP) zum Ermitteln (E1) von Amplitudenwerten jeweils abhängig von der Quadratwurzel eines durch die erwähnte reelle Funktion erhaltenen entsprechenden Werts, und

eine Einrichtung (MP) zum Zuordnen (E2) einer Phase zu jedem der Amplitudenwerte in der Weise, daß ein Amplitudenwert und ein Phasenwert für jeden Punkt des komplexen Bildes definiert sind.

15. Vorrichtung nach einem der Ansprüche 10 bis 14, dadurch gekennzeichnet, daß sie außerdem eine Einrichtung (MP) zum Überabtasten des zweidimensionalen Bildes (IM; IM2) enthält.

16. Vorrichtung nach einem der Ansprüche 10 bis 15, dadurch gekennzeichnet, daß sie außerdem eine Einrichtung (MP) zum Codieren (E6) von Werten enthält, die erhalten werden durch die Amplitude der Summe des komplexen Feldes und des resultierenden Beugungsbildes (IM4).

17. Vorrichtung nach einem der Ansprüche 10 bis 16, dadurch gekennzeichnet, daß die zwei Komponenten des Faltungsprodukts einem für das zweidimensionale Bild (IM; IM3) repräsentativen, komplexen Feld bzw. einem für eine ungerichtete optische Welle (DIF) repräsentativen komplexen Feld entsprechen.

**Claims**

1. A method of producing a hologram (HO) from a two-dimensional image (IM; IM3) which is in the form of digital data, the method comprising the following steps:

   simulating (E4) the production of a diffracted image (IM4) resulting from the diffraction of an optical wave (DIF) by the two-dimensional image (IM; IM3), and
   adding (E5) a complex field representing a reference optical wave (REF) to the resulting diffracted image (IM4) in order to produce said hologram (HO),

   characterised in that the simulating step (E4) consists of computing a convolutional product, associated with the two-dimensional image, of two components, by applying a complex transform to the two components so as to obtain two respective transforms, and by further applying the transform which is the inverse of said complex transform to the product of said transforms.

2. A method according to claim 1, characterised in that said complex transform is one of the following complex transforms: Walsh transform, Hankel transform, Paley transform, orthogonal polynomial transform, Hadamar transform, Karhunen-Loeve transform, multiresolution discrete wavelet transform, adaptive wavelet transform, a transform which is a composite of at least two of the above transforms and a transform which is a composite of at least one of the above transforms and a Fourier transform.

3. A method according to claim 1, characterised in that said complex transform is the Fourier transform.

4. A method according to any one of claims 1 to 3, characterised in that the two-dimensional image (IM) is defined by a real function (f (x, y)), and in that the method comprises, prior to the simulating step (E4), the step (E1, E2) of transforming the two-dimensional image defined by said real function into a complex two-dimensional image (IM2) defined by a complex function.

5. A method according to claim 4, characterised in that said step (E1, E2) of transforming the two-dimensional image into a complex two-dimensional image (IM2) comprises the following steps:

   determining (E1) amplitude values each depending on the square root of a corresponding value taken by said real function, and
   associating (E2) a phase with each of said amplitude values so that an amplitude value and a phase value are defined for each point of the complex image.

6. A method according to any one of claims 1 to 5, characterised in that it comprises, prior to the simulating step (E4), the step (E3) of oversampling the two-dimensional image (IM; IM2).

7. A method according to claims 4 and 6, or according to claims 5 and 6, characterised in that the oversampling step is carried out after said step of transforming the two-dimensional image into a complex two-dimensional image.

8. A method according to any one of claims 1 to 7, further comprising the step (E6) of encoding values taken by the amplitude of the sum of said complex field and the resulting diffracted image (IM4).

9. A method according to any one of claims 1 to 8, characterised in that the two components of the convolutional product respectively correspond to a complex field representing the two-dimensional image (IM; IM3) and to a complex field representing a spherical optical wave (DIF).

10. A system for producing a hologram (HO) from a two-dimensional image (IM; IM3) comprising:

   means (MP) for simulating (E4) the production of a diffracted image (IM4) resulting from the diffraction of an optical wave (DIF) by the two-dimensional image (IM; IM3), and
   means (MP) for adding (E5) a complex field representing a reference optical wave (REF) to the resulting diffracted image (IM4) to produce said hologram (HO),

   characterised in that the simulating means comprise means (MP) for calculating a convolutional product, associated with the two-dimensional image, of two components, by applying a complex transform to the two components so as to obtain two respective transforms, and by further applying the transform which is the inverse of said complex transform to the product of said transforms.

**11.** A system according to claim 10, characterised in that said complex transform is one of the following complex transforms: Walsh transform, Hankel transform, Paley transform, orthogonal polynomial transform, Hadamar transform, Karhunen-Loeve transform, multiresolution discrete wavelet transform, adaptive wavelet transform, a transform which is a composite of at least two of the above transforms and a transform which is a composite of at least one of the above transforms and a Fourier transform.

**12.** A system according to claim 10, characterised in that said complex transform is the Fourier transform.

**13.** A system according to any one of claims 10 to 12, characterised in that it further comprises means (MP) for transforming (E1, E2) the two-dimensional image, defined by a real function (f (x, y)), into a complex two-dimensional image (IM2) defined by a complex function.

**14.** A system according to claim 13, characterised in that said means for transforming the two-dimensional image into a complex two-dimensional image (IM2) comprises :

> means (MP) for determining (E1) amplitude values each depending on the square root of a corresponding value taken by said real function, and
> means (MP) for associating (E2) a phase with each of said amplitude values so that an amplitude value and a phase value are defined for each point of the complex image.

**15.** A system according to any one of claims 10 to 14, characterised in that it further comprises means (MP) for oversampling the two-dimensional image (IM; IM2).

**16.** A system according to any one of claim 10 to 15, characterised in that it further comprises means (MP) for encoding (E6) values taken by the amplitude of the sum of said complex field and the resulting diffracted image (IM4).

**17.** A system according to any one of claims 10 to 16, characterised in that the two components of the convolutional product respectively correspond to a complex field representing the two-dimensional image (IM; IM3) and to a complex field representing a spherical optical wave (DIF).

FIG.1

FIG.2

ETAPES E1 à E5

FIG.3

FIG.4

FIG.5